# EUROPÄISCHE PATENTANMELDUNG

(11) **EP 3 001 380 A1**
(43) Veröffentlichungstag der Anmeldung: **30.03.2016**
(21) Anmeldenummer: 15177601.0
(22) Anmeldetag: 21.07.2015
(51) Int. Cl.: G06Q 50/00

(54) **DIAGNOSEVERFAHREN UND ERHEBUNGSVERFAHREN FÜR FAHRZEUGE**

(30) Priorität: 25.09.2014 DE 102014219407
(71) Anmelder: Volkswagen Aktiengesellschaft, 38440 Wolfsburg (DE)
(72) Erfinder: Zinchenko, Tetiana, 38102 Braunschweig (DE); Sasse, Andreas, 38112 Braunschweig (DE); di Martino, Sergio, 38118 Braunschweig (DE); Kwoczek, Simon, 38118 Braunschweig (DE); Richter, Felix, 30455 Hannover (DE)

(57) **Zusammenfassung**

Die vorliegende Erfindung betrifft ein Diagnoseverfahren für Fahrzeuge einer Gruppe von Fahrzeugen. Bei dem Diagnoseverfahren werden Daten, welche sich auf mindestens ein Fahrzeug der Gruppe von Fahrzeugen beziehen, aus einem sozialen Medium (10) erfasst. In Abhängigkeit von den erfassten Daten werden Beanstandungen, welche sich auf eine beanstandete Eigenschaft des mindestens einen Fahrzeugs beziehen, bestimmt (103). In Abhängigkeit von den Beanstandungen wird für mindestens ein Fahrzeug eine Diagnoseinformation erzeugt (105).

## Beschreibung

Die vorliegende Erfindung betrifft ein Diagnoseverfahren für Fahrzeuge sowie ein Erhebungsverfahren zur Bestimmung einer Verwendung von Fahrzeugfunktionen. Bei den Verfahren werden insbesondere Daten aus einem sozialen Medium, beispielsweise einem internetbasierten sozialen Netzwerk oder einer internetbasierten Diskussionsplattform, verwendet.

Aufgrund des erheblichen Wachstums von sozialen Medien ist derzeit eine freie Datenermittlung möglich. Soziale Medien bezeichnen in diesem Zusammenhang digitale Medien und Technologien, die es ihren Benutzern ermöglichen, sich untereinander auszutauschen und mediale Inhalte zu erstellen und zu verbreiten. Beispiele für soziale Medien sind beispielsweise sogenannte Blogs, Themenplattformen und soziale Netzwerke. Die sozialen Medien können themenunabhängig wie z.B. Twitter oder Facebook sein, oder auf spezielle Themen bezogen sein, wie z.B. Benutzerplattformen und Foren für beispielsweise Computer, Haushaltsgeräte und insbesondere auch Kraftfahrzeuge.

In diesem Zusammenhang offenbart die US 2013/0035983 A1 ein System zum Validieren von Kundenbeschwerden über Produkte. Das System kann ein Datenverarbeitungssystem umfassen, welches ausgestaltet ist, Mitteilungen in sozialen Medien, sogenannte Postings, abzufragen, welche in einem sozialen Mediennetzwerksystem über das Produkt gemacht wurden. Ferner ist das Datenverarbeitungssystem ausgestaltet, auf der Grundlage der Ergebnisse der Abfrage zu bestimmen, wie weit jede Beschwerde verbreitet ist. Ferner können diese Mitteilungen verwendet werden, um geschäftsbezogene Bestimmungen zu unterstützen und Produkte zu konfigurieren und zu platzieren.

Parallel dazu hat die elektronische Datenverarbeitung und Vernetzung auch Einzug in Fahrzeuge, insbesondere Personenkraftwagen und Lastkraftwagen, sowie deren Entwicklung gehalten, wodurch die Komplexität von Fahrzeugen sowohl in Bezug auf elektronische Komponenten als auch mechanische Komponenten angestiegen ist und eine Vielzahl von neuen Funktionen bereitgestellt werden können. Durch die gestiegene Komplexität und die vielen verfügbaren Funktionen bei modernen Fahrzeugen können eine Vielzahl von Fehlern auftreten, welche jedoch nur geringe Auswirkungen auf einige wenige Funktionen haben können und somit schwer identifizierbar und behebbar sind. Ferner kann ein Benutzer des Fahrzeugs mit der Vielzahl von Funktionen überfordert sein und daher nur eine eingeschränkte Teilmenge der vorhandenen Funktionen nutzen. Es besteht daher ein Bedarf, die zuvor beschriebenen Unzulänglichkeiten zu beseitigen oder zumindest zu mildern.

Gemäß der vorliegenden Erfindung wird daher ein Diagnoseverfahren für Fahrzeuge aus einer Gruppe von Fahrzeugen nach Anspruch 1, ein Erhebungsverfahren zur Bestimmung einer Verwendung von Fahrzeugfunktionen nach Anspruch 10, eine Diagnosevorrichtung nach Anspruch 12 und eine Vorrichtung zum Bestimmen einer Popularität einer Verwendung von Fahrzeugfunktionen nach Anspruch 13 bereitgestellt. Die abhängigen Ansprüche definieren bevorzugte und vorteilhafte Ausführungsformen der Erfindung.

Gemäß der vorliegenden Erfindung wird ein Diagnoseverfahren für Fahrzeuge aus einer Gruppe von Fahrzeugen bereitgestellt. Bei dem Verfahren werden Daten aus einem sozialen Medium erfasst. Die Daten beziehen sich auf mindestens ein Fahrzeug der Gruppe von Fahrzeugen. In Abhängigkeit von den erfassten Daten werden Beanstandungen bestimmt, welche sich auf eine beanstandete Eigenschaft des mindestens einen Fahrzeugs beziehen. In Abhängigkeit von den Beanstandungen wird eine Diagnoseinformation für das mindestens eine Fahrzeug erzeugt. Indem die Beanstandungen und letztlich die Diagnoseinformation auf der Grundlage von Daten aus sozialen Medien automatisch bestimmt werden, können auftretende Fehler an Komponenten oder Bauteilen des Fahrzeugs zeitnah erfasst und erkannt werden. Außerdem stellen die sozialen Medien eine breite Datenbasis zur Verfügung. Unterschiedliche Beanstandungen können zu ähnlichen oder gleichen Diagnosen führen. Durch die breite Datenbasis kann somit die Zuverlässigkeit der Diagnoseinformation erhöht werden. Weiterhin kann durch die breite Datenbasis unterschieden werden, ob es sich bei beispielsweise einem Ausfall eines Bauteils um einen eher zufälligen Ausfall oder um einen systematischen Ausfall handelt. Ebenso kann beispielsweise für Fehlfunktionen von Systemen des Fahrzeugs bestimmt werden, ob diese Fehlfunktion insbesondere bei bestimmten Betriebszuständen des Fahrzeugs systematisch auftritt oder eher zufällig aufgetreten ist und beispielsweise auf einer üblicherweise vorhandenen Ausfallwahrscheinlichkeit beruht. Insbesondere die Geschwindigkeit, mit welcher die Daten, Beanstandungen und Diagnoseinformationen aus dem sozialen Medium abgeleitet werden können, ist erheblich höher als bei vergleichbaren Informationen aus beispielsweise Werkstätten, da eine Beanstandung in beispielsweise einem Blog von einem Benutzer üblicherweise sehr zeitnah eingetragen wird, wohingegen ein Werkstattbesuch zumeist erst Tage, Wochen oder sogar Monate später erfolgt.

Die Gruppe von Fahrzeugen kann insbesondere mehrere Fahrzeuge gleicher Art umfassen. Fahrzeuge gleicher Art weisen zumindest eine gemeinsame Eigenschaft auf, beispielsweise den gleichen Fahrzeugtyp, den gleichen Motortyp, gleiche Ausstattungsmerkmale oder einen gleichen Produktionszeitraum. Derartige Informationen können beispielsweise aus den Daten, welche aus dem sozialen Medium erfasst wurden, abgeleitet werden oder können beispielsweise dem Benutzer zugeordnet sein, welcher die Daten in das soziale Medium eingestellt hat. Indem die Art des Fahrzeugs bekannt ist, kann die Diagnoseinformation anhand der Beanstandung genauer erzeugt werden. Ferner kann die Diagnoseinformation zusammen mit der Fahrzeugart gespeichert werden, um, wie zuvor beschrieben, eine Statistik über ähnliche oder gleiche Diagnoseinformationen zu erstellen, um beispielsweise eine Art des Fehlers, zufällig oder systematisch, zu bestimmen.

Die Diagnoseinformation kann insbesondere eine Störung oder einen Ausfall einer Funktion oder einer Komponente des Fahrzeugs umfassen. Ferner kann die Diagnoseinformation einen Fahrzeugzustand oder Benutzungsbedingungen des Fahrzeugs, bei welchen die Beanstandung bestimmt wurde, umfassen. Der Fahrzeugzustand kann z.B. einen Bewegungszustand, wie z.B. eine Geschwindigkeit oder eine Kurvenfahrt, sowie einen Motorzustand, beispielsweise eine Motortemperatur, Schubbetrieb, Volllastbetrieb usw., umfassen. Die Benutzungsbedingungen können beispielsweise einen Beladungszustand oder eine Anzahl von in dem Fahrzeug aktuell verwendeten Mobilfunkgeräten umfassen. Dadurch können beispielsweise Bedingungen und Zustände ermittelt werden, bei denen eine bestimmte Funktion oder Komponente des Fahrzeugs ausgefallen ist oder gestört wurde. Aus einer größeren Datenmenge derartiger Ausfälle oder Störungen können dann beispielsweise genauere Ursachen für den Ausfall oder die Störung ermittelt werden.

Bei einer Ausführungsform des Diagnoseverfahrens wird zusätzlich in Abhängigkeit von der erzeugten Diagnoseinformation eine Fahrzeugdiagnoseinformation von einem Fahrzeugdiagnosesystem von einem der Fahrzeuge der Gruppe von Fahrzeugen abgerufen. Das Fahrzeug, von welchem die Fahrzeugdiagnoseinformation abgerufen wird, kann beispielsweise das Fahrzeug sein, welches der Benutzer, welcher die Daten in das sozial Medium eingegeben hat, gerade verwendet, oder ein Fahrzeug gleicher Art sein. Für den ersteren Fall ist verständlicherweise eine Einwilligung des Benutzers für eine Fernabfrage seiner Fahrzeugdiagnoseinformationen erforderlich. Ein anderes Fahrzeug gleicher Art kann beispielsweise ein Fahrzeug einer Fahrzeugflotte des Herstellers oder ein anderes entsprechendes Testfahrzeug sein. Indem die Fahrzeugdiagnoseinformationen in Abhängigkeit von der auf der Grundlage der sozialen Medien erzeugten Diagnoseinformation abgerufen werden, können gezielt Fahrzeugdiagnoseinformationen eines bestimmten Bereichs abgerufen oder ausgewertet werden und diese Fahrzeugdiagnoseinformationen mit den erzeugten Diagnoseinformationen abgeglichen werden. Dadurch können Störungen oder Ausfälle von Funktionen oder Komponenten des Fahrzeugs schnell und zuverlässig ermittelt werden. Ferner können die auf der Grundlage der sozialen Medien erzeugten Diagnoseinformationen gegenüber den in dem Fahrzeug erzeugten Fahrzeugdiagnoseinformationen validiert werden und die Verfahren, welche die Diagnoseinformationen bzw. die Fahrzeugdiagnoseinformationen erzeugen, entsprechend optimiert werden.

Bei einer weiteren Ausführungsform des Diagnoseverfahrens werden weitere Daten, welche sich auf mindestens ein Fahrzeug der Gruppe von Fahrzeugen beziehen, aus weiteren sozialen Medien erfasst und in Abhängigkeit von den erfassten Daten werden weitere Beanstandungen, welche sich auf die beanstandete Eigenschaft beziehen, bestimmt. Die Diagnoseinformation wird zusätzlich in Abhängigkeit von den weiteren Beanstandungen erzeugt. Indem mehrere soziale Medien verwendet werden, kann die Datenbasis weiter verbreitert werden und somit die Diagnoseinformation umfangreicher und zuverlässiger erzeugt werden. Ferner können die sozialen Medien, aus denen die Daten erfasst werden, bewertet werden, beispielsweise in Bezug auf ihre Zuverlässigkeit bezüglich der Qualität und Richtigkeit der darin veröffentlichten Daten, sowie in Bezug auf ihre Geschwindigkeit, mit welcher Benutzer entsprechende Daten eingeben. Die Geschwindigkeit betrifft dabei einen zeitlichen Abstand zwischen dem Auftreten der beanstandeten Eigenschaft und dem Eingeben entsprechender Daten in das soziale Medium. In sozialen Medien, in welchen üblicherweise nur sehr kurze Nachrichten verfasst und verbreitet werden, wie beispielsweise Twitter oder Facebook, können Beanstandungen sehr kurz nach ihrem Auftreten verfügbar sein, allerdings nur wenig ausführlich. In Benutzerforen sind Informationen bezüglich einer Beanstandung erst später verfügbar, beispielsweise einige Stunden oder Tage später, dafür jedoch erheblich ausführlicher. Auf dieser Grundlage können die sozialen Medien gewichtet werden und eine entsprechende Zuverlässigkeit oder Qualität den daraus erzeugten Beanstandungen und Diagnoseinformationen zugeordnet werden.

Bei einer weiteren Ausführungsform des Diagnoseverfahrens werden Fehlerbeanstandungen, welche sich auf mindestens ein Fahrzeug der Gruppe von Fahrzeugen beziehen, aus Reparaturdatenbanken von Werkstätten abgerufen und die Diagnoseinformation zusätzlich in Abhängigkeit von den Fehlerbeanstandungen aus den Reparaturdatenbanken erzeugt. In Kombination mit den Fehlerbeanstandungen aus den Reparaturdatenbanken kann die Zuverlässigkeit der Diagnoseinformation weiter erhöht werden.

Die Daten, welche von einem Benutzer des mindestens einen Fahrzeugs in das soziale Medium eingegeben werden, können insbesondere Textnachrichten umfassen. Textnachrichten können mit geeigneten Verfahren, beispielsweise einer sogenannten Data-Mining-Technologie, zuverlässig ausgewertet werden, um die Beanstandungen automatisch zu bestimmen. Zusätzlich können bei dem Verfahren aus den Daten des sozialen Mediums Zusatzinformationen automatisch bestimmt werden, beispielsweise ein Alter einer Person, welche die Daten in das soziale Medium eingegeben hat, ein Fahrerprofil der Person, beispielsweise Vielfahrer, Langstreckenfahrer, Stadtfahrer, sportlicher Fahrer oder defensiver Fahrer, eine geographische Position, an welcher die Beanstandung aufgetreten ist oder die Daten bezüglich der Beanstandung in das soziale Medium eingegeben wurden, sowie beispielsweise einen Zeitpunkt oder aktuelle Wetterbedingungen, bei welchen die Beanstandung aufgetreten ist oder die Daten bezüglich der Beanstandung eingegeben wurden. Durch Berücksichtigung derartiger Informationen können beispielsweise Ursachen für sporadisch auftretende Fehler einfacher und zuverlässiger diagnostiziert werden. Wenn beispielsweise eine bestimmte Beanstandung besonders häufig bei beispielsweise Regen auftritt, könnte die Ursache eine mangelhafte Abdichtung einer Komponente des Fahrzeugs sein.

Gemäß der vorliegenden Erfindung wird weiterhin ein Erhebungsverfahren zur Bestimmung einer Verwendung von Fahrzeugfunktionen durch einen Benutzer des Fahrzeugs bereitgestellt. Die Fahrzeugfunktionen betreffen Funktionen einer bestimmten Gruppe von Funktionen des Fahrzeugs. Die Fahrzeugfunktionen betreffen insbesondere Funktionen, welche eine Bedienung durch den Benutzer erfordern, beispielsweise Funktionen eines Navigationssystems, eines Entertainmentsystems, einer Fahrerassistenzfunktion, wie z.B. eines Einparkassistenten, eines Abstandswarn- oder-halteassistenten oder eines Spurhalterassistenten, oder eines Konfigurationssystems des Fahrzeugs zum individuellen Einstellen von Komponenten und Funktionen des Fahrzeugs, wie z.B. einer Klimatisierungseinstellung oder einer Beleuchtungseinstellung für den Innenraum des Fahrzeugs. Das Fahrzeug ist ein Fahrzeug aus einer Gruppe von Fahrzeugen gleicher Art, d.h. ein Fahrzeug aus einer Gruppe von Fahrzeugen, welche mindestens eine gemeinsame Eigenschaft aufweisen, wie z.B. einen Fahrzeugtyp, einen Motortyp, ein Ausstattungsmerkmal oder eine Gruppe von Ausstattungsmerkmalen oder einen Produktionszeitraum. Bei dem Verfahren werden Daten, welche sich auf mindestens ein Fahrzeug der Gruppe von Fahrzeugen beziehen, aus einem sozialen Medium erfasst. Soziale Medien umfassen in diesem Zusammenhang beispielsweise Benutzerplattformen, Blogs und soziale Netzwerke, in denen der Benutzer beispielsweise eine Erfahrung oder eine Frage zu einer Funktion des Fahrzeugs veröffentlicht. Auf der Grundlage der erfassten Daten wird eine Popularität einer Benutzung einer Fahrzeugfunktion der Gruppe von Fahrzeugfunktionen automatisch bestimmt. Wenn beispielsweise auf der Grundlage der erfassten Daten bestimmt wird, dass eine bestimmte Fahrzeugfunktion in dem sozialen Netz nur äußerst selten oder gar nicht diskutiert wird, kann dies beispielsweise daran liegen, dass diese Funktion im Wesentlichen nicht benötigt wird oder so kompliziert zu bedienen oder zu aktivieren ist, dass die meisten Benutzer darauf verzichten.

Mit Popularität wird im Allgemeinen die Beliebtheit einer Funktion oder eines Produktes in einer Gruppe von Menschen bezeichnet. Die Popularität einer Funktion oder eines Produkts kann beispielsweise über das Internet gemessen werden. Hierbei kann über geeignete Suchanfragen untersucht werden, wie häufig und in welchem Kontext diese Funktion oder dieses Produkt auf Seiten im Internet erwähnt wird. Alternativ oder zusätzlich kann die Popularität eine Häufigkeit einer Verwendung einer Funktion oder eines Produktes sein. Die Häufigkeit der Verwendung kann beispielsweise mittels einer entsprechenden Analyse von Äußerungen im Internet bestimmt werden oder beispielsweise in Kundenfahrzeugen oder Flottenfahrzeugen elektronisch in beispielsweise einer Datenbank protokolliert werden.

Bei einem Beispiel zur Verwendung des Erhebungsverfahrens betrifft die Fahrzeugfunktion beispielsweise eine Aktivierung einer Klimatisierungsautomatik oder einer Standheizung des Fahrzeugs mithilfe einer Funkfernbedienung. Die Funkfernbedienung weist beispielsweise vier Bedienelemente auf, um das Fahrzeug für wahlweise 15 Minuten, 30 Minuten, 60 Minuten oder 120 Minuten im Stand vorzuheizen oder vorzukühlen. Anhand der Daten aus dem sozialen Medium wird deutlich, dass Zeiten von 15 Minuten, 30 Minuten und 60 Minuten häufig verwendet werden, eine Zeit von 120 Minuten jedoch nur sehr selten verwendet wird. Die Popularität der 120-minütigen Zeit ist daher verhältnismäßig gering. Als Konsequenz könnte bei einer neueren Ausgestaltung der Funkfernbedienung ein betreffendes Bedienelement weggelassen werden. Bei einem weiteren Beispiel können sich die aus dem sozialen Medium erfassten Daten beispielsweise auf ein Konfigurationsmenü eines Navigationssystems des Fahrzeugs beziehen. In dem Konfigurationsmenü kann beispielsweise unter anderem eine Farbkonfiguration für eine Anzeige der Karteninformation auf dem Navigationssystem eingestellt werden. Auf der Grundlage der aus dem sozialen Medium erfassten Daten ergibt sich, dass diese Farbkonfiguration nur sehr selten diskutiert wird und daher nur eine geringe Popularität aufweist. Als Konsequenz kann beispielsweise die Farbkonfiguration in Zukunft weggelassen werden oder es kann untersucht werden, ob die Farbkonfiguration kompliziert zu bedienen ist oder so unscheinbar in dem Konfigurationsmenü angeordnet ist, dass die Benutzer diese nur selten verwenden.

Bei einer Ausführungsform des Erhebungsverfahrens wird eine weitere Popularität einer Benutzung der Fahrzeugfunktion durch Benutzer von Testfahrzeugen bestimmt. Die Testfahrzeuge sind beispielsweise Fahrzeuge einer Fahrzeugflotte des Fahrzeugherstellers und von gleicher Art wie die Fahrzeuge der Gruppe von Fahrzeugen, auf welche sich die Daten aus dem sozialen Medium beziehen. Die weitere Popularität wird in Abhängigkeit von der aus dem sozialen Medium bestimmten Popularität validiert oder umgekehrt kann die aus den sozialen Medien bestimmte Popularität anhand der weiteren Popularität validiert werden. Bei den Testfahrzeugen kann beispielsweise mithilfe elektronischer Protokollmechanismen automatisch jede Verwendung einer Fahrzeugfunktion durch den Benutzer aufgezeichnet werden. Daraus kann eine erwartete Popularität einer Fahrzeugfunktion abgeleitet werden. Durch einen Vergleich mit der tatsächlichen Popularität, welche mithilfe der Daten aus dem sozialen Medium bestimmt wurde, können die aus den Testfahrzeugen ermittelten Informationen validiert werden und bei Abweichungen können in zukünftigen Tests die Testbedingungen angepasst oder optimiert werden.

Gemäß der vorliegenden Erfindung wird weiterhin eine Diagnosevorrichtung bereitgestellt, welche ein Erfassungsmittel zum Erfassen von Daten aus einem sozialen Medium, eine Bestimmungsvorrichtung zum Bestimmen von Beanstandungen und eine Verarbeitungseinheit zum Erzeugen einer Diagnoseinformation umfasst. Die Daten aus dem sozialen Medium beziehen sich auf mindestens ein Fahrzeug einer Gruppe von Fahrzeugen, insbesondere auf eine Gruppe von Fahrzeugen gleicher Art. Die Beanstandungen beziehen sich auf eine beanstandete Eigenschaft des mindestens einen Fahrzeugs und werden in Abhängigkeit von den erfassten Daten bestimmt. Die Verarbeitungsvorrichtung erzeugt die Diagnoseinformation für das mindestens eine Fahrzeug in Abhängigkeit von den Beanstandungen. Die Diagnosevorrichtung ist somit zur Durchführung des zuvor beschriebenen Diagnoseverfahrens ausgestaltet und umfasst daher auch die zuvor beschriebenen Vorteile.

Gemäß der vorliegenden Erfindung wird schließlich eine Vorrichtung zum Bestimmen einer Popularität einer Verwendung von Fahrzeugfunktionen einer bestimmten Gruppe von Funktionen eines Fahrzeugs durch einen Benutzer bereitgestellt. Anders ausgedrückt wird mithilfe der Vorrichtung bestimmt, wie beliebt eine Fahrzeugfunktion bei einem Benutzer ist. Das Fahrzeug betrifft ein Fahrzeug aus einer Gruppe von Fahrzeugen gleicher Art. Die Vorrichtung umfasst ein Erfassungsmittel zum Erfassen von Daten, welche sich auf mindestens ein Fahrzeug der Gruppe von Fahrzeugen beziehen und von dem Benutzer in ein soziales Medium eingegeben wurden. Das Erfassungsmittel greift beispielsweise über das Internet auf soziale Medien wie z.B. Blogs oder Diskussionsforen zu. Die Vorrichtung umfasst ferner eine Bestimmungsvorrichtung, welche eine Popularität einer Benutzung einer Fahrzeugfunktion in Abhängigkeit von den erfassten Daten bestimmt. Die Vorrichtung ist daher zur Durchführung des zuvor beschriebenen Erhebungsverfahrens ausgestaltet und erfasst die in Verbindung mit dem Erhebungsverfahren beschriebenen Vorteile.

Die vorliegende Erfindung wird nachfolgend unter Bezugnahme auf die Zeichnung im Detail beschrieben werden.
Figur 1 zeigt schematisch die Durchführung eines Diagnoseverfahrens gemäß einer Ausführungsform der vorliegenden Erfindung.
Figur 2 zeigt Verfahrensschritte eines Diagnoseverfahrens gemäß einer Ausführungsform der vorliegenden Erfindung.

Aufgrund der erheblichen Zunahme von sozialen Medien ist derzeit eine frei zugängliche Datenerfassung möglich. Benutzer von sozialen Medien stellen Informationen über Funktionalitäten von unterschiedlichen Fahrzeugfunktionen und Fahrzeugbauteilen sowie Hinweise bezüglich einer Produktverwendbarkeit, Benutzerakzeptanz oder einer allgemeinen Meinung bezüglich Produkten oder einzelnen Funktionen in den sozialen Medien bereit. Die sozialen Medien umfassen beispielsweise internetbasierte Benutzerplattformen, Benutzerforen und Blogs. Diese Informationen können komplementär mit anderen Informationsquellen verwendet werden, beispielsweise mit Datenbeständen von Fahrzeugflottendaten eines Fahrzeugherstellers und sogenannten "After-Sales"-Daten, d.h. Daten, welche beispielsweise durch Befragen von Käufern nach dem Kauf erhoben werden oder aus Werkstattdaten ermittelt werden. Informationen aus sozialen Medien stellen wichtige sofortige Anzeichen einer Produktschwäche, unzureichender Eigenschaften oder Fehlern bereit, da in sozialen Medien eine hohe Geschwindigkeit erreicht wird, mit welcher neue Meldungen erscheinen, d.h., die Zeit zwischen dem Moment, an dem der Benutzer entsprechende Anzeichen wahrnimmt, und dem Erscheinen einer entsprechenden Mitteilung oder Nachricht in dem sozialen Medium, ist verhältnismäßig kurz. Im Gegensatz dazu sind Daten über Fehler, welche in Form von Kundensymptomen oder Beanstandungen in einer Werkstatt erfasst werden, erst mit einer gewissen Verzögerung von einigen Tagen bis Monaten während der Garantiezeit und mit einer erheblich größeren Verzögerung nach dem Ende der Garantiezeit verfügbar. Entsprechende Beanstandungen in sozialen Medien sind hingegen innerhalb weniger Minuten oder Stunden verfügbar.

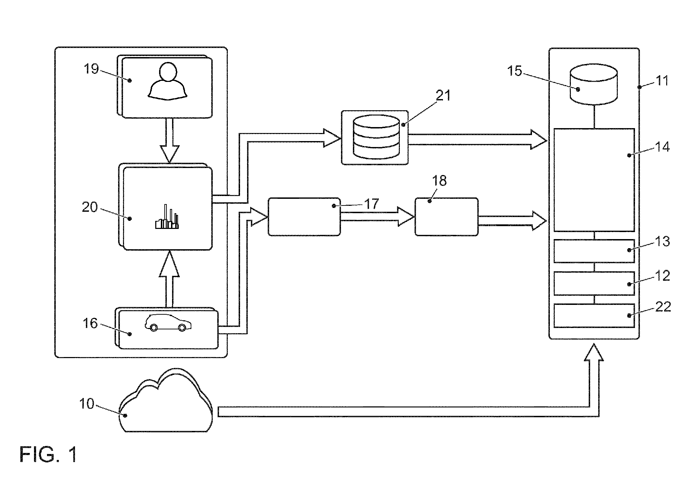

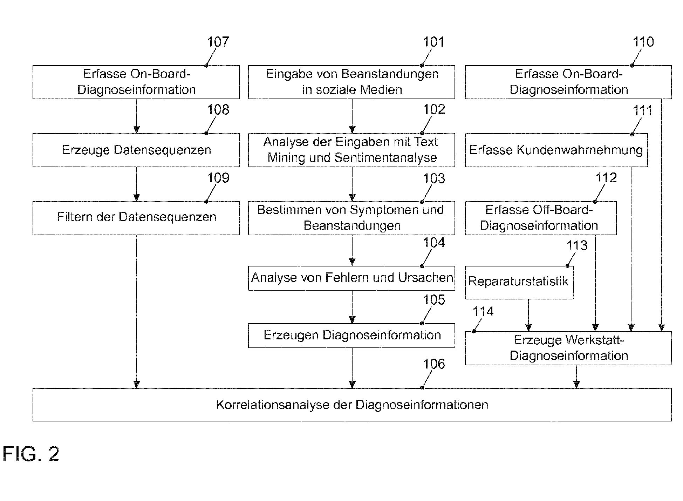

Figur 1 zeigt Datenflüsse und Komponenten, welche für die Durchführung eines Diagnoseverfahrens verwendet werden können. Entsprechende Verfahrensschritte zur Durchführung des Diagnoseverfahrens werden nachfolgend in Verbindung mit Figur 2 beschrieben werden. Es ist vorgesehen, dass ein Fahrzeugbenutzer im Schritt 101 Beanstandungen, welche sich auf eine beanstandete Eigenschaft eines Fahrzeugs beziehen, in ein soziales Medium 10, beispielsweise einen Blog oder ein Benutzerforum, beispielsweise Twitter oder Facebook, eingibt. Die Beanstandung kann hauptsächlich Text umfassen, d.h. der Benutzer gibt eine Beschreibung der beanstandeten Eigenschaften ein. Dabei können zusätzlich Informationen bezüglich der Fahrzeugart und der Umstände, unter denen die Beanstandung aufgetreten ist, eingegeben werden. Alternativ oder zusätzlich können beispielsweise die Fahrzeugart und/oder eine aktuelle geographische Position aus Informationen des sozialen Medium bezogen werden, beispielsweise kann die Fahrzeugart dem Benutzer zugeordnet sein und die geographische Information automatisch von dem Eingabemittel, beispielsweise einem Mobilfunktelefon, mit welchem der Benutzer die Beanstandung eingibt, erfasst und bereitgestellt werden. Weiterhin können von den sozialen Medien zusätzliche Hintergrundinformationen bereitgestellt werden, wie z.B. Umweltinformationen, ein Fahrerprofil, ein sozialer Hintergrund des Fahrers, ein Alter des Fahrers usw. Die von dem Benutzer eingegebene Information ist häufig unstrukturiert und kann ein breites Spektrum von Fahrzeugkomponenten betreffen. Daher können zur Auswertung dieser Informationen im Schritt 102 sogenannte Text-Mining-Verfahren verwendet werden. Text-Mining umfasst ein Bündel von Algorithmus-basierten Analyseverfahren zur Entdeckung von Bedeutungsstrukturen aus un- oder schwachstrukturierten Textdaten. Mit statistischen und linguistischen Mitteln erschließt Text-Mining aus Texten Strukturen, um Kerninformationen der verarbeiteten Texte schnell zu erkennen. Weiterhin kann im Schritt 102 eine sogenannte "Sentimentanalyse" durchgeführt werden. Die Sentimentanalyse (auch Sentiment Detection oder Stimmungserkennung genannt) ist ein Untergebiet des Text-Mining und bezeichnet die automatische Auswertung von Texten mit dem Ziel, eine geäußerte Haltung als positiv oder negativ zu erkennen. Aus der Analyse der Daten und Informationen aus dem sozialen Medium werden im Schritt 103 Symptome oder Beanstandungen, welche sich auf eine beanstandete Eigenschaft des verwendeten Fahrzeugs beziehen, bestimmt.

In der Figur 1 wird das Bestimmen dieser Symptome und Beanstandungen von einem Diagnoseserver 11 durchgeführt. Der Diagnoseserver 11 kann ein Erfassungsmittel 22 zum Erfassen der Daten aus dem sozialen Medium 10 und eine Bestimmungsvorrichtung 12 zum Analysieren der Daten (Schritt 102) und Bestimmen der Beanstandung aus den Daten (Schritt 103) umfassen. Auf der Grundlage der so bestimmten Symptome und Beanstandungen in Schritt 103 wird in Schritt 104 eine Fehler- und Ursachenanalyse mit einer Verarbeitungsvorrichtung 13 des Diagnoseservers 11 durchgeführt, um somit eine Diagnoseinformation zu erzeugen (Schritt 105). Diese Diagnoseinformation kann einer Korrelationsvorrichtung 14 des Diagnoseservers 11 zugeführt werden. In der Korrelationsvorrichtung 14 findet eine Korrelationsanalyse (Schritt 106) statt. Bei der Korrelationsanalyse können weitere Diagnoseinformationen aus weiteren Quellen herangezogen werden. Beispielsweise können Diagnoseinformationen aus weiteren sozialen Medien, Werkstätten und Onboard-Diagnosesystemen von Fahrzeugen betrachtet werden. Dazu können die Diagnoseinformationen der verschiedenen Quellen in einer gemeinsamen Datenbank, einem sogenannten Datawarehouse (DWH) 15, in dem Diagnoseserver 11 gesammelt werden.

Onboard-Diagnoseinformationen von einem Fahrzeug 16 können beispielsweise mithilfe einer Datenübertragung direkt von dem Fahrzeug 16 abgerufen werden. Das Fahrzeug 16 kann beispielsweise ein Fahrzeug einer Testflotte des Fahrzeugherstellers oder ein Kundenfahrzeug sein, vorausgesetzt der Kunde hat einer entsprechenden Datenfernabfrage zugestimmt. Wie in der Figur 1 gezeigt ist, werden Onboard-Diagnoseinformationen des Fahrzeugs 16 zunächst im Schritt 107 erfasst in einem gemeinsamen Datenstrom 17 gesammelt. Aus dem Datenstrom 17 werden im Schritt 108 Datensequenzen erzeugt, welche beispielsweise Informationen der CAN-Bussysteme des Fahrzeugs 16, Umgebungsdaten wie z.B. Temperatur, Luftdruck und Wetterbedingungen, eine geographische Position des Fahrzeugs 16 sowie einen Fahrzeugkontext und eine Fahrzeughistorie umfassen. Die Datensequenzen können insgesamt übertragen werden oder in einem Schritt 109 mit einem Filter 18 gefiltert werden. Dabei können Fahrzeugdaten herausgefiltert werden, welche bezüglich der in der Verarbeitungsvorrichtung 13 erzeugten Diagnoseinformationen relevant sind. Die so gefilterten Fahrzeugdaten werden in der Datenbank 15 gespeichert und bei der Korrelationsanalyse (Schritt 106) in der Korrelationsvorrichtung 14 verwendet.

Bei der Korrelationsanalyse (Schritt 106) in der Korrelationsvorrichtung 14 können ferner Werkstattdaten berücksichtigt werden. Wenn ein Kunde 19 ein Fahrzeug 16 in eine Werkstatt 20 bringt, können in der Werkstatt 20 einerseits Informationen von der Onboard-Diagnose des Fahrzeugs 16 selbst abgerufen werden (Schritt 110) und andererseits Symptombeschreibungen oder Fehlerbeanstandungen des Kunden 19 als sogenannte Kundenwahrnehmung aufgenommen werden (Schritt 111). Ferner können mit Messvorrichtungen der Werkstatt 20 weitere Diagnoseinformationen, sogenannte Offboard-Diagnosedaten, an dem Fahrzeug 16 ermittelt werden (Schritt 112). Auf der Grundlage dieser Informationen kann eine weitere Diagnoseinformation erzeugt werden (Schritt 114). Diese Information kann in Verbindung mit einer Reparaturstatistik in einer Kundendienst- oder Werkstattdatenbank 21 abgelegt werden und von der Korrelationsvorrichtung 14 des Diagnoseservers 11 bei der Korrelationsanalyse berücksichtigt werden.

Ein Vorteil des in Verbindung mit den Figuren beschriebenen Verfahrens ist, dass Informationen verwendet werden, welche von Fahrzeugen 16, beispielsweise einer Fahrzeugflotte des Herstellers, einer Kundendienstdatenbank 21, welche auch After-Sales-Servicedata-Warehouse (ASDWH) genannt wird, und sozialen Medien 10, sogenannten Cloud-Quellen, bereitgestellt werden. Dies ermöglicht eine sofortige Reaktion auf Benutzerbeanstandungen. Wenn beispielsweise auf der Grundlage der Daten der sozialen Medien 10 eine Frequenz von Beanstandungen bezüglich einer bestimmten Funktion oder eines Fahrzeugteils einen vorbestimmten Schwellenwert erreicht, kann beispielsweise eine Ferndiagnose an weiteren Fahrzeugen von beispielsweise einer Fahrzeugflotte des Fahrzeugherstellers ausgelöst werden. Somit wird ein zuverlässiges Wissen angesammelt, ob tatsächlich eine große Anzahl von Fehlern einer speziellen Funktion oder eines speziellen Teils in dem Fahrzeug vorliegt. Zusätzlich kann eine Gegenprobe mit den Kundendienstdaten (ASDWH) durchgeführt werden. Eine Verwendung von sozialen Medien oder sonstigen internetbasierten Informationsquellen kann dieses Wissen verbessern, indem zusätzliche Informationen über Ursachen der aufgetretenen Fehler bereitgestellt werden. Um die Genauigkeit der von den unterschiedlichen Quellen erhaltenen Informationen zu erhöhen, können beispielsweise Wichtungsalgorithmen verwendet werden.

Alternativ oder zusätzlich kann auf der Grundlage der zuvor beschriebenen Sentimentanalyse und dem Text-Mining von sozialen Medien ein Kundenverhalten bzw. eine technische Akzeptanz von bestimmten Produkten oder Funktionen bestimmt werden und entsprechende Informationen, welche aus Flottendaten einer Fahrzeugflotte des Herstellers bestimmt wurden, mit den Informationen, welche aus den sozialen Medien extrahiert werden, in beiden Richtungen validiert werden. Beispielsweise kann auf der Grundlage der in dem sozialen Medium erfassten Daten bestimmt werden, wie unterschiedliche Fahrzeugfunktionen von den Kunden verwendet werden und darüber hinaus die technische Akzeptanz von unterschiedlichen Fahrzeugfunktionen und Fahrzeugkomponenten. Wenn dabei eine sehr populäre oder eine sehr unpopuläre Fahrzeugfunktion erkannt wird, kann eine genaue Benutzerverwendung aus den Flottendaten bestimmt werden. Dadurch ergibt sich die Möglichkeit, zu analysieren, warum einige Funktionen von den Kunden nicht verwendet werden. Entsprechende Verbesserungen der Funktionen oder Komponenten sind dann erforderlich, um eine Kundenakzeptanz zu erhöhen. Durch die Sentimentsanalyse der Daten der sozialen Medien 10 kann zusätzlich eine Wissensansammlung über normalerweise nicht verfügbare Informationen erreicht werden, beispielsweise können zusätzlich Umweltbedingungen, ein Fahrerprofil, ein Alter und ein sozialer Hintergrund erfasst werden.

### Bezugszeichenliste

- 10: soziales Medium
- 11: Diagnoseserver
- 12: Bestimmungsvorrichtung
- 13: Verarbeitungsvorrichtung
- 14: Korrelationsvorrichtung
- 15: Datenbank
- 16: Fahrzeug
- 17: Datenstrom
- 18: Filter
- 19: Kunde
- 20: Werkstatt
- 21: Datenbank
- 22: Erfassungsmittel
- 101-114: Schritt

## Patentansprüche

1. Diagnoseverfahren für Fahrzeuge einer Gruppe von Fahrzeugen, umfassend:
- Erfassen von Daten, welche sich auf mindestens ein Fahrzeug der Gruppe von Fahrzeugen beziehen, aus einem sozialen Medium (10),
- Bestimmen (102, 103) von Beanstandungen, welche sich auf eine beanstandete Eigenschaft des mindestens einen Fahrzeugs beziehen, in Abhängigkeit von den erfassten Daten, und
- Erzeugen (105) einer Diagnoseinformation für das mindestens eine Fahrzeug in Abhängigkeit von den Beanstandungen.

2. Diagnoseverfahren nach Anspruch 1, **dadurch gekennzeichnet, dass** das Diagnoseverfahren ferner umfasst:
- Abrufen von Fahrzeugdiagnoseinformationen von einem Fahrzeugdiagnosesystem von einem Fahrzeug (16) der Gruppe von Fahrzeugen in Abhängigkeit von der erzeugten Diagnoseinformation.

3. Diagnoseverfahren nach Anspruch 1 oder 2, **dadurch gekennzeichnet, dass** das Diagnoseverfahren ferner umfasst:
- Erfassen von weiteren Daten, welche sich auf mindestens ein Fahrzeug der Gruppe von Fahrzeugen beziehen, aus einem weiteren sozialen Medium,
- Bestimmen (10, 103) von weiteren Beanstandungen, welche sich auf die beanstandete Eigenschaft beziehen, in Abhängigkeit von den erfassten weiteren Daten, und
- Erzeugen (105, 106) der Diagnoseinformation ferner in Abhängigkeit von den weiteren Beanstandungen.

4. Diagnoseverfahren nach einem der vorhergehenden Ansprüche, **dadurch gekennzeichnet, dass** das Diagnoseverfahren ferner umfasst:
- Abrufen von Fehlerbeanstandungen aus Reparaturdatenbanken (21) von Werkstätten (20), welche sich auf mindestens ein Fahrzeug (16) der Gruppe von Fahrzeugen beziehen, und
- Erzeugen (106) der Diagnoseinformation ferner in Abhängigkeit von den Fehlerbeanstandungen.

5. Diagnoseverfahren nach Anspruch 3 und 4, **dadurch gekennzeichnet, dass** das Diagnoseverfahren ferner umfasst:
- Bewerten der sozialen Medien in Abhängigkeit von den aus den Daten der sozialen Medien bestimmten Beanstandungen und den Fehlerbeanstandungen aus den Reparaturdatenbanken (21), und
- Gewichten der sozialen Medien in Abhängigkeit von der Bewertung.

6. Diagnoseverfahren nach einem der vorhergehenden Ansprüche, **dadurch gekennzeichnet, dass** die Daten eine Textnachricht umfassen, welche von einem Benutzer des mindestens einen Fahrzeugs verfasst wurde.

7. Diagnoseverfahren nach einem der vorhergehenden Ansprüche, **dadurch gekennzeichnet, dass** das Diagnoseverfahren ferner umfasst:
- Bestimmen von Zusatzinformationen aus den Daten des sozialen Mediums (10), wobei die Zusatzinformationen mindestens eine Information aus einer Gruppe umfassen, welche umfasst:
- ein Alter einer Person, welche die Daten in das soziale Medium (10) eingegeben hat,
- ein Fahrerprofil einer Person, welche die Daten in das soziale Medium (10) eingegeben hat,
- eine geografische Position, an welcher die Beanstandung aufgetreten ist oder die Daten bezüglich der Beanstandung in das soziale Medium (10) eingegeben wurden,
- einen Zeitpunkt, zu welchem die Beanstandung aufgetreten ist oder die Daten bezüglich der Beanstandung in das soziale Medium (10) eingegeben wurden, und
- Wetterbedingungen, bei welchen die Beanstandung aufgetreten ist oder die Daten bezüglich der Beanstandung in das soziale Medium (10) eingegeben wurden.

8. Diagnoseverfahren nach einem der vorhergehenden Ansprüche, **dadurch gekennzeichnet, dass** die Gruppe von Fahrzeugen mehrere Fahrzeuge gleicher Art umfasst, wobei die Fahrzeuge gleicher Art zumindest eine gemeinsame Eigenschaft aus einer Gruppe aufweisen, welche umfasst:
- Fahrzeugtyp,
- Motortyp,
- Ausstattungsmerkmal, und
- Produktionszeitraum.

9. Diagnoseverfahren nach einem der vorhergehenden Ansprüche, **dadurch gekennzeichnet, dass** die Diagnoseinformation mindestens eine Information aus einer Gruppe aufweist, welche umfasst:
- eine Störung einer Funktion des Fahrzeugs,
- einen Ausfall einer Funktion des Fahrzeugs,
- eine Störung einer Komponente des Fahrzeugs,
- einen Ausfall einer Komponente des Fahrzeugs,
- einen Fahrzeugzustand, bei welchem die Beanstandung bestimmt wurde, und
- eine Benutzungsbedingung, bei welcher die Beanstandung bestimmt wurde.

10. Erhebungsverfahren zur Bestimmung einer Verwendung von Fahrzeugfunktionen einer bestimmten Gruppe von Funktionen eines Fahrzeugs durch einen Benutzer, wobei das Fahrzeug ein Fahrzeug aus einer Gruppe von Fahrzeugen gleicher Art umfasst, wobei das Erhebungsverfahren umfasst:
- Erfassen von Daten, welche sich auf mindestens ein Fahrzeug der Gruppe von Fahrzeugen beziehen, aus einem sozialen Medium (10), und
- Bestimmen einer Popularität einer Benutzung einer Fahrzeugfunktion der Gruppe von Fahrzeugfunktionen in Abhängigkeit von den erfassten Daten.

11. Erhebungsverfahren nach Anspruch 10, **dadurch gekennzeichnet, dass** das Erhebungsverfahren ferner umfasst:
- Bestimmen einer weiteren Popularität einer Benutzung der Fahrzeugfunktion durch Benutzer von Testfahrzeugen (16), wobei die Testfahrzeuge von gleicher Art wie die Fahrzeuge der Gruppe von Fahrzeugen gleicher Art sind, und
- Validieren der weiteren Popularität in Abhängigkeit von der aus dem sozialen Medium (10) bestimmten Popularität.

12. Diagnosevorrichtung umfassend:
- ein Erfassungsmittel (22) zum Erfassen von Daten, welche sich auf mindestens ein Fahrzeug einer Gruppe von Fahrzeugen beziehen, aus einem sozialen Medium (10),
- eine Bestimmungsvorrichtung (12) zum Bestimmen von Beanstandungen, welche sich auf eine beanstandete Eigenschaft des mindestens einen Fahrzeugs beziehen, in Abhängigkeit von den erfassten Daten, und
- eine Verarbeitungsvorrichtung (13) zum Erzeugen einer Diagnoseinformation für das mindestens eine Fahrzeug in Abhängigkeit von den Beanstandungen.

13. Vorrichtung zum Bestimmen eine Popularität einer Verwendung von Fahrzeugfunktionen einer bestimmten Gruppe von Funktionen eines Fahrzeugs durch einen Benutzer, wobei das Fahrzeug ein Fahrzeug aus einer Gruppe von Fahrzeugen gleicher Art umfasst, wobei die Vorrichtung umfasst:
- ein Erfassungsmittel zum Erfassen von Daten, welche sich auf mindestens ein Fahrzeug der Gruppe von Fahrzeugen beziehen, aus einem sozialen Medium (10), und
- eine Bestimmungsvorrichtung zum Bestimmen einer Popularität einer Benutzung einer Fahrzeugfunktion der Fahrzeugfunktionen in Abhängigkeit von den erfassten Daten.
